# EUROPÄISCHE PATENTSCHRIFT

(11) **EP 4 100 279 B1**
(45) Veröffentlichungstag und Bekanntmachung des Hinweises auf die Patenterteilung: **17.04.2024**
(21) Anmeldenummer: 21703003.0
(22) Anmeldetag: 01.02.2021
(51) Int. Cl.: B60N 2/06, B60N 2/16, B60N 2/18, F16H 25/20

(54) **LÄNGSEINSTELLER UND FAHRZEUGSITZ**
LONGITUDINAL ADJUSTER AND VEHICLE SEAT
DISPOSITIF DE RÉGLAGE LONGITUDINAL ET SIÈGE DE VÉHICULE

(30) Priorität: 04.02.2020 DE 102020102804; 16.04.2020 DE 102020110442
(43) Veröffentlichungstag der Anmeldung: 14.12.2022
(73) Patentinhaber: Adient US LLC, Plymouth, MI 48170 (US)
(72) Erfinder: KUZMA, Martin, 91321 Trencianska Turna (SK); SULAK, Andrej, 95652 Podluzany (SK)
(74) Vertreter: Liedtke & Partner Patentanwälte
(86) Internationale Anmeldenummer: PCT/EP2021/052294
(87) Internationale Veröffentlichungsnummer: WO 2021/156199

(56) Entgegenhaltungen:
- DE-A1-102005 001 333
- DE-B3-102012 106 196

## Beschreibung

Die Erfindung betrifft einen Längseinsteller, insbesondere für einen Fahrzeugsitz, der Längseinsteller aufweisend mindestens ein Schienenpaar, welches aus einer ersten Schiene und einer relativ zu der ersten Schiene in Längsrichtung verschiebbaren zweiten Schiene gebildet ist, wobei die Schienen unter Bildung eines Innenkanals einander wechselseitig umgreifen, wobei in dem Innenkanal eine mit der zweiten Schiene gelagerte Spindelmutter und eine mit der Spindelmutter wirkverbundene Spindel angeordnet sind, wobei in einem Endbereich der ersten Schiene ein mittels eines Motors antreibbares und mit der Spindel zusammenwirkendes Spindelgetriebe angeordnet ist, wobei das Spindelgetriebe von einem Getriebegehäuse umschlossen ist, wobei das Getriebegehäuse wenigstens einen zylindrischen Lagerabschnitt zur Lagerung eines mit der Spindel verbundenen Schneckenrades aufweist. Die Erfindung betrifft ferner einen Fahrzeugsitz.

### Stand der Technik

Aus der DE 10 2005 023 095 A1 ist eine gattungsgemäße Antriebsvorrichtung für einen Kraftfahrzeugsitz in einer Gleitvorrichtung bekannt. Die Antriebsvorrichtung zur Anwendung mit einer Kraftfahrzeugsitz-Gleitvorrichtung umfasst zusammenpassende feste und bewegliche Schienenteile, die zwischen einer vorderen Stellung und einer hinteren Stellung bewegt werden können. Die Antriebsvorrichtung umfasst eine Spindel, eine Spindelmutter, ein Getriebe und eine Einbauvorrichtung. Die Spindel definiert eine Spindelachse und hat ein sich in Längsrichtung erstreckendes Spindelgewinde. Die Spindelmutter kann sicher auf einem ersten Schienenteil befestigt werden und hat ein Innengewinde, das in das Spindelgewinde eingreifen kann. Das Getriebe kann an ein jeweils anderes Schienenteil montiert werden und dreht selektiv die Spindel um die Spindelachse. Die Spindel der Antriebsvorrichtung ist mit einem Spindelrad versehen, das sich in montiertem Zustand der Antriebsvorrichtung durch Spindelradöffnungen des beweglichen Schienenteils nach außen erstreckt. Eine alternative Ausgestaltung einer derartigen Antriebsvorrichtung ist aus der DE 10 2013 207 665 A1 bekannt.

Aus der US 8 061 756 B2 ist eine elektrisch betriebene Sitzgleitvorrichtung bekannt, welche eine untere Schiene, die an einem Boden einer Fahrzeugkarosserie befestigt ist, und eine obere Schiene, die verschiebbar an der unteren Schiene angeordnet ist, aufweist. Ein Sitz ist mit der oberen Schiene verbunden. Eine Schraubenwelle ist innerhalb der oberen Schiene angeordnet. Eine Mutter ist mit der Schraubenwelle verschraubt und mit der unteren Schiene verbunden. Ein Motor ist auf der Seite der oberen Schiene angeordnet. Ein Getriebe ist an der oberen Schiene befestigt, um eine Drehung des Motors auf die Schraubenwelle zu übertragen.

Aus der DE 10 2006 000 195 A1 ist ein motorbetriebener Verstellmechanismus für einen Fahrzeugsitz bekannt, welcher eine erste Schiene zur Befestigung an einem Fahrzeugboden und eine zweite Schiene zur Befestigung an dem Fahrzeugsitz aufweist. Die zweite Schiene ist relativ zu der ersten Schiene gleitend gestützt. Der Verstellmechanismus weist ferner eine mit einem Mutterelement verschraubte Gewindewelle auf, wobei das Mutterelement an der ersten Schiene vorgesehen ist. Die Gewindewelle weist einen gestuften Abschnitt und einen Abschnitt mit kleinerem Durchmesser auf. Der Verstellmechanismus weist zudem eine mit dem gestuften Abschnitt der Gewindewelle in Eingriff befindliche Scheibe, ein an dem Abschnitt mit kleinerem Durchmesser vorgesehenes Befestigungselement, und ein an der zweiten Schiene vorgesehenes Getriebe auf.

Aus der DE 10 2005 001 333 A1 ist ein Getriebe für eine Verstelleinrichtung für einen Fahrzeugsitz bekannt. Innerhalb eines Getriebegehäuses ist eine Spindelmutter, die auf einer Spindel sitzt, zwischen zwei Lagerbuchsen angeordnet. Zur Geräuschreduzierung verfügen diese Lagerbuchsen über einen Führungsabschnitt zur Führung der Spindelmutter und einen Führungsabschnitt zur Führung der Gewindespindel. Hierfür ist beispielsweise ein zylinderförmiger Lagerabschnitt der Lagerbuchsen mit einem sich ändernden Innendurchmesser ausgestattet.

Aus der DE 10 2006 011 718 A1 ist eine Verstellvorrichtung bekannt, welche ein Getriebe aufweist, das über einen Haltewinkel an einer ersten Führungsschiene befestigt ist, wobei das Getriebe mit einer zapfenartigen Auswölbung durch eine Öffnung in der ersten Führungsschiene hindurchragt und der Haltewinkel an die erste Führungsschiene angebördelt ist.

Aus der DE 11 2019 000 026 T5 ist eine Verstellvorrichtung für einen Fahrzeugsitz bekannt, die ein Gehäuse, eine Schnecke, ein Schneckenrad, und eine Spindel umfasst. Die Schnecke ist zur Rotation um eine erste Achse innerhalb des Gehäuses angeordnet und umfasst ein spiralförmiges Gewinde. Das Schneckenrad ist zur Rotation um eine zweite Achse innerhalb des Gehäuses angeordnet und greift mit der Schnecke ineinander. Die Spindel erstreckt sich zur Rotation um die zweite Achse durch das Gehäuse und das Schneckenrad. Die Spindel greift mit dem Schneckenrad ineinander. Aus der DE 10 2005 001 333 A1 ist eine einfache Getriebeanordnung für eine Verstelleinrichtung bekannt. Aus der

DE 10 2012 106 196 B3 ist ein Verstellantrieb mit einem Käfig und einem Gehäuse für eine Antriebseinheit bekannt.

### Aufgabe

Der Erfindung liegt die Aufgabe zu Grunde, einen Längseinsteller eingangs genannter Art zu verbessern, insbesondere einen Längseinsteller mit einem Spindelgetriebe, welches eine erhöhte Steifigkeit und Lastaufnahmefähigkeit ermöglicht, sowie einen entsprechenden Fahrzeugsitz bereitzustellen.

### Lösung

Diese Aufgabe wird erfindungsgemäß gelöst durch einen Längseinsteller gemäss Anspruch 1.

Dadurch, dass das Getriebegehäuse eine an den zylindrischen Lagerabschnitt angrenzende Stufe aufweist, wird das Getriebegehäuse verstärkt und kann in axialer Richtung der Spindel eine erhöhte Last aufnehmen und über den Spindelhalter ableiten. Ferner wird dadurch, dass die Stufe dazu eingerichtet ist, das Schneckenrad in einem Crashfall abzustützen, in einem Inneren des Getriebegehäuses eine zusätzliche axiale Anlagefläche bzw. Stützfläche bereitgestellt, an welcher sich im Crashfall das in dem Getriebegehäuse gelagerte Schneckenrad abstützen kann.

Vorteilhafte Ausgestaltungen, welche einzeln oder in Kombination miteinander eingesetzt werden können, sind Gegenstand der Unteransprüche.

Die erste Schiene ist bevorzugt eine mit einem Fahrzeugsitz verbindbare Sitzschiene. Die zweite Schiene ist bevorzugt eine mit einer Fahrzeugstruktur verbindbare Bodenschiene. Ein möglicher innerer Aufbau sowie die Wirkweise und Funktion des Spindelgetriebes ist beispielsweise aus der DE 10 2013 207 665 A1 bekannt, dessen diesbezüglicher Offenbarungsgehalt hiermit ausdrücklich einbezogen ist.

Das Getriebegehäuse kann mittels mehrerer Gehäuseteile gebildet sein. Das Getriebegehäuse kann aus genau zwei Gehäuseteilen gebildet sein. Ferner kann ein Getriebehalter vorgesehen sein, welcher das Getriebegehäuse umfasst und mittels welchem das Spindelgetriebe mit der ersten Schiene verbunden ist. Die Spindel kann durch zwei zueinander parallele Schenkel eines im Wesentlichen U-förmigen Getriebehalters hindurch gesteckt sein. Die beiden gegenüberliegenden Schenkel sind bevorzugt in an sich bekannter Weise über einen Steg miteinander verbunden. Die beiden Schenkel können alternativ ohne einen Steg, das heißt ohne eine Verbindung zueinander sein.

An jeden der Schenkel kann sich ein Befestigungsschenkel anschließen, mittels dessen der Getriebehalter an der Oberschiene angebracht ist. Die Befestigungsschenkel sind bevorzugt jeweils gegenüber ihrem benachbarten Schenkel um etwa 90° umgebogen bzw. abgewinkelt. In montiertem Zustand des im Wesentlichen U-förmigen Getriebehalters, ist das Getriebegehäuse bevorzugt in Längsrichtung x zwischen den Schenkeln aufgenommen. Die Befestigungsschenkel können Gewindebohrungen aufweisen, mittels welcher in Wechselwirkung mit entsprechenden Schrauben und/oder Gewindebolzen eine Verbindung mit der ersten Schiene herstellbar ist.

Das Schneckenrad kann in einem normalen Gebrauchszustand einen Abstand zu der Stufe aufweisen. In einem normalen Gebrauchszustand kann zwischen dem Schneckenrad und der Stufe ein Spalt vorgesehen sein. In einem Crashfall kann sich das Schneckenrad unmittelbar an der Stufe abstützen.

Das Schneckenrad kann in einem Crashfall koaxial zu einer Spindelachse der Spindel mittels der Stufe abstützbar sein. Das Getriebegehäuse kann zwei Stufen aufweisen. Die Spindelmutter ist bevorzugt axial zu einer Spindelachse zwischen den beiden Stufen angeordnet. Das Getriebegehäuse weist jeweils einen an jeweils eine Stufe angrenzenden zylindrischen Lagerabschnitt auf. Die wenigstens eine Stufe kann relativ zum zylindrischen Lagerabschnitt radial nach innen vorspringen. Die wenigstens eine radial nach innen vorspringende Stufe des Getriebegehäuses kann dem Schneckenrad in axialer Richtung als eine zusätzliche Stützfläche dienen. Ein Innendurchmesser der wenigstens eine Stufe kann geringer sein als ein Innendurchmesser des zylindrischen Lagerabschnitts.

Das Getriebegehäuse kann, bevorzugt in einem oberen Abschnitt des zylindrischen Lagerabschnitts, eine Ausnehmung aufweisen. Ein auf die Spindel aufgeschraubtes Schneckenrad kann mittels zweier Lagerhülsen in dem Getriebegehäuse gelagert sein. Die Lagerhülsen können jeweils einen Kragen aufweisen. Jede Lagerhülse kann einen Vorsprung aufweisen, welcher mit der Ausnehmung des Getriebegehäuses zusammenwirkt. Mittels des Vorsprungs der Lagerhülse in Verbindung mit der Ausnehmung des Getriebegehäuses kann eine Verdrehsicherung für die Lagerhülse bereitgestellt sein. Die Lagerhülsen können verdrehgeseichert in dem Getriebegehäuse gelagert sein.

Die Aufgabe wird ferner erfindungsgemäß gelöst durch einen Fahrzeugsitz mit einem zuvor beschriebenen Längseinsteller.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: einen erfindungsgemäßen Fahrzeugsitz,
- Fig. 2:: einen erfindungsgemäßen Längseinsteller,
- Fig. 3:: eine Seitenansicht eines Schienenpaares des Längseinstellers von Fig. 2, mit einer in einer Ebene aufgeschnittenen ersten Schiene,
- Fig. 4:: ausschnittsweise einen Längsschnitt durch das Schienenpaar von Fig. 3, im Bereich eines Getriebehalters,
- Fig. 5:: schematisch eine erste Hälfte eines Getriebegehäuses,
- Fig. 6:: eine perspektivische Ansicht der ersten Hälfte des Getriebegehäuses von Fig. 5,
- Fig. 7:: schematisch die erste Hälfte des Getriebegehäuses von Fig. 5 mit eingesetztem Getriebe, und
- Fig. 8:: ausschnittsweise eine perspektivische Ansicht der ersten Hälfte des Getriebegehäuses mit eingesetztem Getriebe aus Fig. 7.

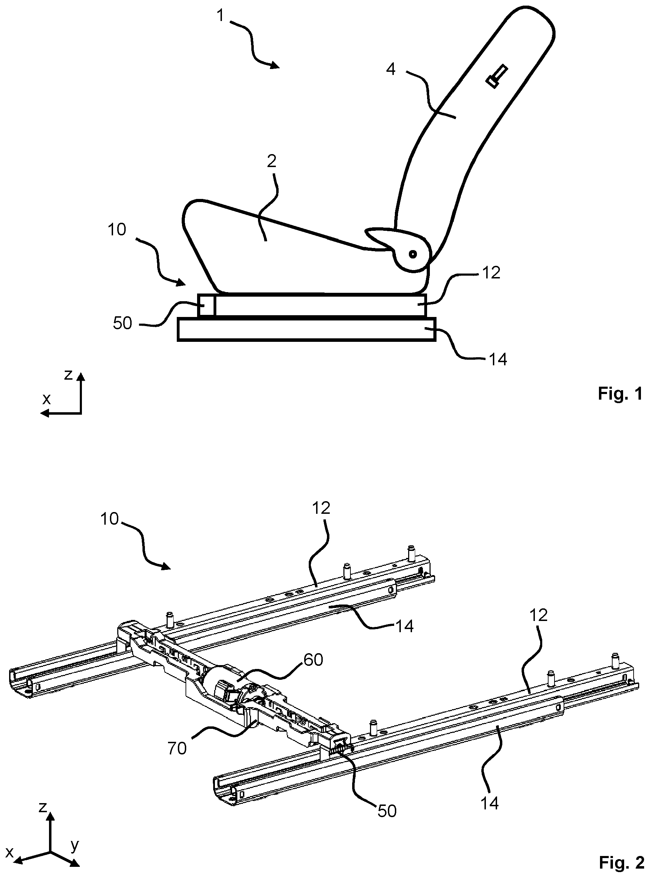

Ein in Fig. 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem in einem Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und eine relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

Fig. 2 zeigt beispielhaft einen erfindungsgemäßen Längseinsteller 10 für einen Fahrzeugsitz 1. Der Längseinsteller 10 weist wenigstens ein Schienenpaar, vorliegend zwei Schienenpaare auf. Die Schienenpaare sind jeweils aus einer ersten Schiene 12, insbesondere zur Verbindung mit einer Sitzstruktur des Fahrzeugsitzes 1, und einer zweiten Schiene 14, insbesondere zur Verbindung mit einer Fahrzeugstruktur, gebildet. Die Schienen 12, 14 des Schienenpaares sind in Längsrichtung x relativ zueinander verschiebbar und umgreifen unter Bildung eines Innenkanals 16 einander wechselseitig.

In dem Innenkanal 16 ist eine mit der zweiten Schiene 14 fest verbundene Spindelmutter 30 und eine mit der Spindelmutter 30 wirkverbundene Spindel 20 angeordnet. Die Spindel 20 erstreckt sich entlang einer Spindelachse parallel zur Längsrichtung x. An einem vorderen Ende der ersten Schiene 12 ist ein mittels eines Motors 60 antreibbares Spindelgetriebe 50 angeordnet. Die Spindel 20 ist mittels des Spindelgetriebes 50 antreibbar. Der Motor 60 ist auf einem zwischen den beiden Spindelgetrieben 50 der jeweiligen Schienenpaare montierten Motorträger 70 gehalten und treibt mittels einer in Fig. 2 nicht dargestellten Welle die beiden Spindelgetriebe 50 an.

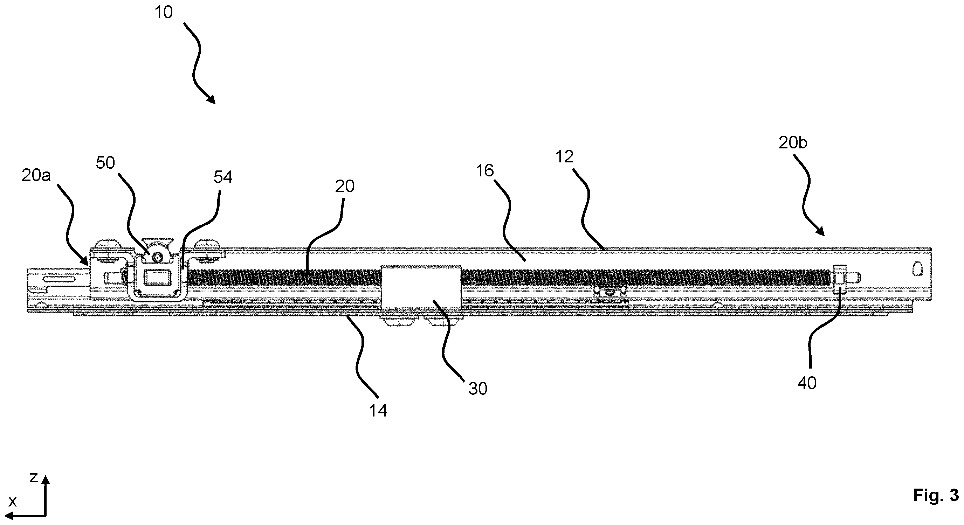

Fig. 3 zeigt eine Seitenansicht eines Schienenpaares des Längseinstellers 10 mit einer in einer Ebene aufgeschnittenen ersten Schiene 12. Die Spindel 20 ist im Bereich eines hinteren Endabschnitts 20b der Spindel 20 mittels eines Spindelhalters drehbar gelagert. Der Spindelhalter ist vorliegend als ein Drehlager 40 ausgestaltet und an der ersten Schiene 12 gehalten. In einem Bereich eines vorderen Endabschnitts 20a der Spindel 20 ist zum rotativen Antrieb der Spindel 20 ein Spindelgetriebe 50 angeordnet, welches in einem Getriebehalter 54 gehalten ist, welcher fest mit der ersten Schiene 12 verbunden ist.

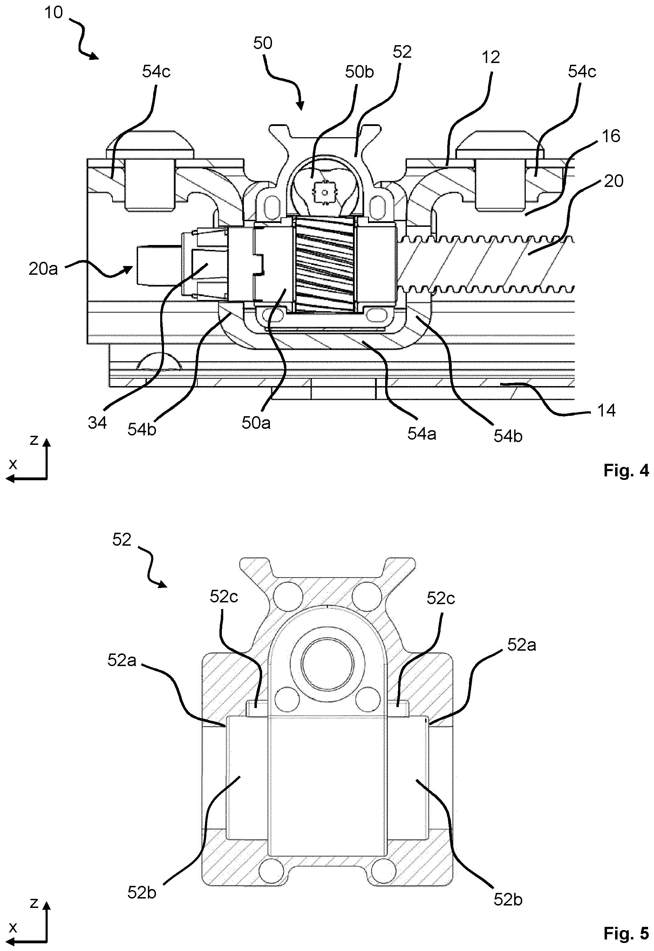

Fig. 4 zeigt ausschnittsweise einen Längsschnitt durch das Schienenpaar im Bereich des Getriebehalters 54. Zur Lagerung der einzelnen Getriebeelemente des Spindelgetriebes 50 ist ein Getriebegehäuse 52 vorgesehen, welches einen zwischen dem Getriebehalter 54 und der ersten Schiene 12 definierten Bauraum mit größtmöglicher Steifigkeit als krafttragendes Gehäuse maximal ausfüllt, also im Wesentlichen innerhalb der ersten Schiene 12 angeordnet ist. Das Getriebegehäuse 52 besteht aus zwei Gehäuseseitenteilen, welche bereichsweise aneinander anliegen und miteinander verschraubt sind. Die beiden Gehäuseseitenteile lagern eine quer zur Längsrichtung x der ersten Schiene 12 angeordnete Antriebsschnecke 50b.

Die Antriebsschnecke 50b ist mit einem in Längsrichtung x gelagerten Schneckenrad 50a wirkverbunden. Das Schneckenrad 50a ist drehfest mit der Spindel 20 verbunden. Vorliegend ist ein Innengewindeabschnitt 58 des Schneckenrads 50a in dem vorderen Endabschnitt 20a der Spindel 20 auf ein Außengewinde der Spindel 20 aufgeschraubt und mittels eines Sicherungselements 34 fixiert. Das Sicherungselement 34 ist hierbei in dem vorderen Endabschnitt 20a der Spindel 20 zwischen der Spindel 20 und dem Schneckenrad 50a verpresst.

Der vordere Endabschnitt 20a der Spindel 20 ist mit dem Schneckenrad 50a mittels einer Pressverbindung oder Quetschverbindung drehfest verbunden. Dazu sind zwischen dem nach vorne aus dem Schneckenrad 50a herausragenden vorderen Endabschnitt 20a und einem ebenfalls nach vorne orientierten Abschnitt des Schneckenrads 50a ein oder mehrere Sicherungselemente 34 durch teilweises Ineinanderschieben miteinander verpresst. Diese Sicherungselemente 34 sind bevorzugt ringförmig bzw. hohlzylindrisch ausgestaltet und an dem gewindefreien vorderen Endabschnitt 20a der Spindel 20 angeordnet.

Der Getriebehalter 54, welcher das Getriebegehäuse 52 umschließt und mittels welchem das Spindelgetriebe 50 mit der ersten Schiene 12 verbunden ist, ist im Wesentlichen U-förmig ausgestaltet. Die Spindel 20 ist durch zwei zueinander parallele Schenkel 54b des Getriebehalters 54 hindurch gesteckt. Die beiden gegenüberliegenden Schenkel 54b sind über einen Steg 54a miteinander verbunden. An jeden der Schenkel 54b schließt sich ein Befestigungsschenkel 54c an, mittels welchem der Getriebehalter 54 an der ersten Schiene 12 angebracht ist. Die Befestigungsschenkel 54c sind bevorzugt gegenüber dem jeweils zugeordneten Schenkel 54b um etwa 90° umgebogen bzw. abgewinkelt, vorliegend jeweils in einer von dem Spindelgetriebe 50 wegweisenden Richtung umgebogen.

In montiertem Zustand des im Wesentlichen U-förmigen Getriebehalters 54, ist das Getriebegehäuse 52 bevorzugt in Längsrichtung x zwischen den Schenkeln 54b aufgenommen. Die Befestigungsschenkel 54c weisen Gewindebohrungen auf, mittels welcher in Wechselwirkung mit entsprechenden Schrauben und/oder Gewindebolzen eine Verbindung mit der ersten Schiene 12 hergestellt ist.

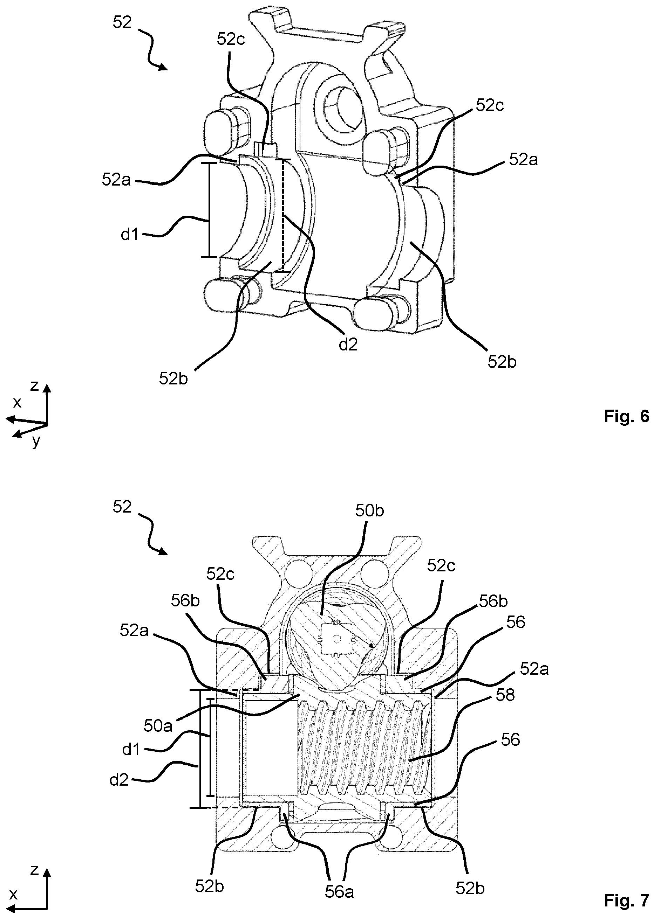

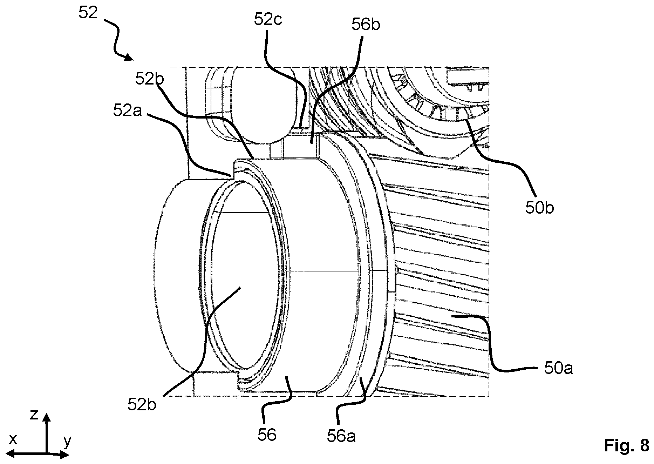

Die Figuren 5 bis 8 zeigen Teile des Spindelgetriebes 50 mit geöffnetem Getriebegehäuse 52. Das Spindelgetriebe 50 ist von dem Getriebegehäuse 52 umschlossen. Das Getriebegehäuse 52 weist vorliegend zwei zylindrische Lagerabschnitte 52b zur Lagerung des mit der Spindel 20 verbundenen Schneckenrades 50a auf. Das Getriebegehäuse 52 weist jeweils eine an jeden der zylindrischen Lagerabschnitte 52b angrenzende Stufe 52a auf, wobei die Stufe 52a dazu eingerichtet ist, das Schneckenrad 50a in einem Crashfall abzustützen. In einem in den Figuren 7 und 8 dargestellten normalen Gebrauchszustand weist das Schneckenrad 50a einen Abstand zu jeder der beiden Stufen 52a auf. In dem normalen Gebrauchszustand ist vorliegend zwischen dem Schneckenrad 50a und der Stufe 52a ein Spalt vorgesehen. Das Schneckenrad 50a kann sich in einem Crashfall unmittelbar an der Stufe 52a abstützen.

Parallel zu der Spindelachse der Spindel 20 sind an gegenüberliegenden äußeren Seiten des Getriebegehäuses 52 jeweils eine Stufe 52a angeordnet. Die Stufen 52a springen relativ zum zylindrischen Lagerabschnitt 52b radial nach innen vor. Ein Innendurchmesser d1 der Stufen 52a ist geringer als ein Innendurchmesser d2 der zylindrischen Lagerabschnitte 52b. Das Getriebegehäuse 52 weist in einem oberen Abschnitt des zylindrischen Lagerabschnitts 52b eine Ausnehmung 52c auf.

Das drehfest mit der Spindel 20 verbundene Schneckenrad 50a ist mittels zweier Lagerhülsen 56 in dem Getriebegehäuse 52 gelagert. Die Lagerhülsen 56 weisen jeweils einen Kragen 56a auf. Jede Lagerhülse 56 weist einen Vorsprung 56b auf, welcher mit der Ausnehmung 52c des Getriebegehäuses 52 zusammenwirkt. Die Lagerhülsen 56 sind verdrehgesichert in dem Getriebegehäuse 52 gehalten.

In einem Crashfall, insbesondere einem Frontalaufprall oder Heckaufprall, werden die erste Schiene 12 und zweite Schiene 14 von crashbedingten äußeren Krafteinflüssen in Längsrichtung x relativ zueinander belastet. Ein hierbei von dem Fahrzeugsitz 1 in die erste Schiene 12 eingeleiteter Kraftimpuls muss über den Getriebehalter 54, das Spindelgetriebe 50, die Spindel 20 und die zweite Schiene 14 an das Fahrzeug weitergeleitet werden, oder umgekehrt. Eine derartige Belastung des Längseinstellers 10 kann zu einer vergleichsweise sehr starken Belastung des Schneckenrades 50a in Längsrichtung x führen. Die radial nach innen vorspringenden Stufen 52a des Getriebegehäuses 52 bieten dem Schneckenrad 50a in axialer Richtung, bzw. vorliegend parallel zur Längsrichtung x, zusätzliche Stützflächen, durch welche die Belastung des Schneckenrades 50a in Längsrichtung x besser von dem Getriebegehäuse 52 aufnehmbar und an den Getriebehalter 54 weiterleitbar ist.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, insofern dies vom Wortlaut der unabhängigen Ansprüche abgedeckt ist.

### Bezugszeichenliste

- 1: Fahrzeugsitz
- 2: Sitzteil
- 4: Lehne
- 10: Längseinsteller
- 12: erste Schiene
- 14: zweite Schiene
- 16: Innenkanal
- 20: Spindel
- 20a: vorderer Endabschnitt (der Spindel 20)
- 20b: hinterer Endabschnitt (der Spindel 20)
- 30: Spindelmutter
- 34: Sicherungselement
- 40: Drehlager
- 50: Spindelgetriebe
- 50a: Schneckenrad
- 50b: Antriebsschnecke
- 52: Getriebegehäuse
- 52a: Stufe
- 52b: zylindrischer Lagerabschnitt
- 52c: Ausnehmung
- 54: Getriebehalter
- 54a: Steg
- 54b: Schenkel
- 54c: Befestigungsschenkel
- 56: Lagerhülse
- 56a: Kragen
- 56b: Vorsprung
- 58: Innengewindeabschnitt
- 60: Motor
- 70: Motorträger
- d1: Innendurchmesser
- d2: Innendurchmesser
- x: Längsrichtung
- y: Querrichtung
- z: Vertikalrichtung

## Patentansprüche

1. Längseinsteller (10), insbesondere für einen Fahrzeugsitz (1), der Längseinsteller (10) aufweisend mindestens ein Schienenpaar, welches aus einer ersten Schiene (12) und einer relativ zu der ersten Schiene (12) in Längsrichtung (x) verschiebbaren zweiten Schiene (14) gebildet ist, wobei die Schienen (12, 14) unter Bildung eines Innenkanals (16) einander wechselseitig umgreifen, wobei in dem Innenkanal (16) eine mit der zweiten Schiene (14) gelagerte Spindelmutter (30) und eine mit der Spindelmutter (30) wirkverbundene Spindel (20) angeordnet sind, wobei in einem Endbereich der ersten Schiene (12) ein mittels eines Motors (60) antreibbares und mit der Spindel (20) zusammenwirkendes Spindelgetriebe (50) angeordnet ist, wobei das Spindelgetriebe (50) von einem Getriebegehäuse (52) umschlossen ist, wobei das Getriebegehäuse (52) wenigstens einen zylindrischen Lagerabschnitt (52b) zur Lagerung eines mit der Spindel (20) verbundenen Schneckenrades (50a) aufweist,
**dadurch gekennzeichnet, dass**
das Getriebegehäuse (52) parallel zu der Spindelachse der Spindel (20) zwei an den zylindrischen Lagerabschnitt (52b) angrenzende und an gegenüberliegenden äußeren Seiten des Getriebegehäuses (52) angeordnete Stufen (52a) aufweist, wobei die Spindelmutter (30) axial zu der Spindelachse zwischen den beiden Stufen (52a) angeordnet ist und die Stufen (52a) dazu eingerichtet sind, das Schneckenrad (50a) in einem Crashfall abzustützen.

2. Längseinsteller (10) gemäß Anspruch 1, wobei das Schneckenrad (50a) in einem normalen Gebrauchszustand einen Abstand zu der jeweiligen Stufe (52a) aufweist.

3. Längseinsteller (10) gemäß einem der Ansprüche 1 oder 2, wobei das Schneckenrad (50a) in einem Crashfall unmittelbar an der jeweiligen Stufe (52a) abstützbar ist.

4. Längseinsteller (10) gemäß einem der Ansprüche 1 bis 3, wobei das Schneckenrad (50a) in einem Crashfall koaxial zu einer Spindelachse der Spindel (20) mittels der jeweiligen Stufe (52a) abstützbar ist.

5. Längseinsteller (10) gemäß einem der Ansprüche 1 bis 4, wobei die jeweilige Stufe (52a) relativ zum zylindrischen Lagerabschnitt (52b) radial nach innen vorspringt.

6. Längseinsteller (10) gemäß Anspruch 5, wobei die jeweilige radial nach innen vorspringende Stufe (52a) des Getriebegehäuses (52) in einem Crashfall als eine zusätzliche Stützfläche zur Abstützung des Schneckenrads (50a) in axialer Richtung an dem Getriebegehäuse (52) dient.

7. Längseinsteller (10) gemäß einem der Ansprüche 1 bis 6, wobei ein Innendurchmesser (d1) der jeweiligen Stufe (52a) geringer ist als ein Innendurchmesser (d2) des zylindrischen Lagerabschnitts (52b).

8. Längseinsteller (10) gemäß einem der Ansprüche 1 bis 7, wobei das Getriebegehäuse (52) in dem zylindrischen Lagerabschnitt (52b) eine Ausnehmung (52c) aufweist.

9. Längseinsteller (10) gemäß einem der Ansprüche 1 bis 8, wobei ein drehfest mit der Spindel (20) verbundenes Schneckenrad (50a) mittels zweier Lagerhülsen (56) in dem Getriebegehäuse (52) gelagert ist.

10. Längseinsteller (10) gemäß Anspruch 8 oder 9, wobei jede Lagerhülse (56) einen Vorsprung (56b) aufweist, welcher mit je einer Ausnehmung (52c) des Getriebegehäuses (52) zusammenwirkt.

11. Längseinsteller (10) gemäß Anspruch 9 oder 10, wobei die Lagerhülsen (56) jeweils einen Kragen (56a) aufweisen.

12. Längseinsteller (10) gemäß einem der Ansprüche 1 bis 11, wobei das Getriebegehäuse (52) mittels mehrerer Gehäuseteile gebildet ist.

13. Längseinsteller (10) gemäß einem der Ansprüche 1 bis 12, wobei ein Getriebehalter (54) vorgesehen ist, welcher das Getriebegehäuse (52) umfasst und mittels welchem das Spindelgetriebe (50) mit der ersten Schiene (12) verbunden ist.

14. Fahrzeugsitz (1) mit einem Längseinsteller (10) gemäß einem der Ansprüche 1 bis 13.

## Claims

1. Longitudinal adjuster (10), in particular for a vehicle seat (1), the longitudinal adjuster (10) having at least one pair of rails formed from a first rail (12) and a second rail (14), which is displaceable in a longitudinal direction (x) relative to the first rail (12), wherein the rails (12, 14) engage alternately around one another so as to form an inner channel (16), wherein a spindle nut (30) which is mounted by way of the second rail (14) and a spindle (20) which is operatively connected to the spindle nut (30) are arranged in the inner channel (16), wherein a spindle gear mechanism (50) which is driveable by means of a motor (60) and which interacts with the spindle (20) is arranged in an end region of the first rail (12), wherein the spindle gear mechanism (50) is surrounded by a gear-mechanism housing (52), wherein the gear-mechanism housing (52) has at least one cylindrical bearing section (52b) for mounting of a worm gear (50a) connected to the spindle (20),
**characterized in that**,
the gear-mechanism housing (52), parallel to the spindle axis of the spindle (20), has two steps (52a) which adjoin the cylindrical bearing section (52b) and which are arranged at opposite outer sides of the gear-mechanism housing (52), wherein the spindle nut (30) is arranged between the two steps (52a) axially in relation to the spindle axis and the steps (52a) are configured to support the worm gear (50a) in a crash situation.

2. Longitudinal adjuster (10) according to Claim 1, wherein the worm gear (50a) is at a distance from the respective step (52a) in a normal use state.

3. Longitudinal adjuster (10) according to either of Claims 1 and 2, wherein the worm gear (50a) is supportable directly against the respective step (52a) in a crash situation.

4. Longitudinal adjuster (10) according to one of Claims 1 to 3, wherein the worm gear (50a) is supportable by means of the respective step (52a) coaxially in relation to a spindle axis of the spindle (20) in a crash situation.

5. Longitudinal adjuster (10) according to one of Claims 1 to 4, wherein the respective step (52a) projects radially inwards relative to the cylindrical bearing section (52b).

6. Longitudinal adjuster (10) according to Claim 5, wherein the respective radially inwardly projecting step (52a) of the gear-mechanism housing (52) serves as an additional supporting surface for supporting the worm gear (50a) against the gear-mechanism housing (52) in an axial direction in a crash situation.

7. Longitudinal adjuster (10) according to one of Claims 1 to 6, wherein an inner diameter (d1) of the respective step (52a) is smaller than an inner diameter (d2) of the cylindrical bearing section (52b) .

8. Longitudinal adjuster (10) according to one of Claims 1 to 7, wherein the gear-mechanism housing (52) has a recess (52c) in the cylindrical bearing section (52b) .

9. Longitudinal adjuster (10) according to one of Claims 1 to 8, wherein a worm gear (50a) connected rotationally conjointly to the spindle (20) is mounted by means of two bearing sleeves (56) in the gear-mechanism housing (52).

10. Longitudinal adjuster (10) according to Claim 8 or 9, wherein each bearing sleeve (56) has a projection (56b) which interacts with in each case one recess (52c) of the gear-mechanism housing (52).

11. Longitudinal adjuster (10) according to Claim 9 or 10, wherein the bearing sleeves (56) each have a collar (56a).

12. Longitudinal adjuster (10) according to one of Claims 1 to 11, wherein the gear-mechanism housing (52) is formed by means of multiple housing parts.

13. Longitudinal adjuster (10) according to one of Claims 1 to 12, wherein provision is made of a gear-mechanism holder (54) which surrounds the gear-mechanism housing (52) and by means of which the spindle gear mechanism (50) is connected to the first rail (12).

14. Vehicle seat (1) having a longitudinal adjuster (10) according to one of Claims 1 to 13.

## Revendications

1. Dispositif de réglage longitudinal (10), notamment pour un siège de véhicule (1), le dispositif de réglage longitudinal (10) présentant au moins une paire de rails qui est formée d'un premier rail (12) et d'un deuxième rail (14) pouvant être déplacé par rapport au premier rail (12) dans la direction longitudinale (x), les rails (12, 14) s'entourant mutuellement en formant un canal intérieur (16), un écrou de broche (30) monté avec le deuxième rail (14) et une broche (20) en liaison active avec l'écrou de broche (30) étant agencés dans le canal intérieur (16), un engrenage de broche (50) pouvant être entraîné au moyen d'un moteur (60) et coopérant avec la broche (20) étant agencé dans une zone d'extrémité du premier rail (12), l'engrenage de broche (50) étant entouré d'un carter d'engrenage (52), le carter d'engrenage (52) présentant au moins une section de palier cylindrique (52b) pour le montage d'une roue à vis sans fin (50a) reliée à la broche (20),
**caractérisé en ce que**
le carter d'engrenage (52) présente, parallèlement à l'axe de broche de la broche (20), deux gradins (52a) adjacents à la section de palier cylindrique (52b) et agencés sur des côtés extérieurs opposés du carter d'engrenage (52), l'écrou de broche (30) étant agencé axialement par rapport à l'axe de broche entre les deux gradins (52a), et les gradins (52a) étant adaptés pour supporter la roue à vis sans fin (50a) en cas de collision.

2. Dispositif de réglage longitudinal (10) selon la revendication 1, dans lequel la roue à vis sans fin (50a) présente une distance par rapport au gradin (52a) respectif dans un état d'utilisation normal.

3. Dispositif de réglage longitudinal (10) selon l'une quelconque des revendications 1 ou 2, dans lequel la roue à vis sans fin (50a) peut être soutenue directement par le gradin respectif (52a) en cas de collision.

4. Dispositif de réglage longitudinal (10) selon l'une quelconque des revendications 1 à 3, dans lequel la roue à vis sans fin (50a) peut être soutenue au moyen du gradin (52a) respectif en cas de collision, coaxialement à un axe de broche de la broche (20).

5. Dispositif de réglage longitudinal (10) selon l'une quelconque des revendications 1 à 4, dans lequel le gradin (52a) respectif fait saillie radialement vers l'intérieur par rapport à la section de palier cylindrique (52b).

6. Dispositif de réglage longitudinal (10) selon la revendication 5, dans lequel le gradin (52a) respectif, faisant saillie radialement vers l'intérieur, du carter d'engrenage (52) sert de surface de soutien supplémentaire pour soutenir la roue à vis sans fin (50a) dans la direction axiale sur le carter d'engrenage (52) en cas de collision.

7. Dispositif de réglage longitudinal (10) selon l'une quelconque des revendications 1 à 6, dans lequel un diamètre intérieur (d1) du gradin (52a) respectif est inférieur à un diamètre intérieur (d2) de la section de palier cylindrique (52b).

8. Dispositif de réglage longitudinal (10) selon l'une quelconque des revendications 1 à 7, dans lequel le carter d'engrenage (52) présente un évidement (52c) dans la section de palier cylindrique (52b).

9. Dispositif de réglage longitudinal (10) selon l'une quelconque des revendications 1 à 8, dans lequel une roue à vis sans fin (50a) reliée de manière solidaire en rotation à la broche (20) est montée dans le carter d'engrenage (52) au moyen de deux douilles de palier (56) .

10. Dispositif de réglage longitudinal (10) selon la revendication 8 ou 9, dans lequel chaque douille de palier (56) présente une saillie (56b) qui coopère avec un évidement (52c) respectif du carter d'engrenage (52).

11. Dispositif de réglage longitudinal (10) selon la revendication 9 ou 10, dans lequel les douilles de palier (56) présentent chacun une collerette (56a).

12. Dispositif de réglage longitudinal (10) selon l'une quelconque des revendications 1 à 11, dans lequel le carter d'engrenage (52) est formé au moyen de plusieurs parties de carter.

13. Dispositif de réglage longitudinal (10) selon l'une quelconque des revendications 1 à 12, dans lequel il est prévu un support d'engrenage (54) qui comprend le carter d'engrenage (52) et au moyen duquel l'engrenage de broche (50) est relié au premier rail (12) .

14. Siège de véhicule (1), avec un dispositif de réglage longitudinal (10) selon l'une quelconque des revendications 1 à 13.
